# EUROPEAN PATENT SPECIFICATION

(11) **EP 4 213 438 B1**
(45) Date of publication and mention of the grant of the patent: **02.12.2026**
(21) Application number: 22151387.2
(22) Date of filing: 13.01.2022
(51) Int. Cl.: H04L 9/00, G06F 21/64

(54) **METHOD AND SYSTEM FOR MULTI-BLOCK MINING BY A SINGLE NODE, IN (A) SINGLE ROUND(S), UNDER DIFFERENT CONSENSUS SCHEMES**
VERFAHREN UND SYSTEM ZUM MEHRFACHBLOCK-MINING DURCH EINEN EINZIGEN KNOTEN, IN (EINER) EINZELNEN RUNDE(N), UNTER VERSCHIEDENEN KONSENS-SCHEMATA
PROCÉDÉ ET SYSTÈME D'EXPLORATION MULTI-BLOCS PAR UN NOEUD UNIQUE, EN CYCLE(S) UNIQUE(S), DANS DIFFÉRENTS SCHÉMAS DE CONSENSUS

(43) Date of publication of application: 19.07.2023
(73) Proprietor: Atos Public Safety LLC, Irving, Texas (US)
(72) Inventor: Tsiatsikas, Zisis, 55534 Thessaloniki (GR)
(74) Representative: Novagraaf Technologies

(56) References cited:
- US-A1- 2019 238 316
- US-A1- 2020 112 443
- US-A1- 2020 167 779

## Description

The present invention relates to a method and a system for multi-block mining in (a) single round(s), under different consensus schemes. The present invention realizes the concept of sequential multiple block mining in (a) single mining round(s) from a single node. Thereby, the node separates the transactions based on the context to select the appropriate consensus algorithm in order to use multiple consensus algorithms at the same mining round, one for each block (not one after another in different mining rounds).

Usually, blockchain networks focus on specific types of transactions. For example, the bitcoin blockchain focuses on financial applications, while a different network may be focused on transactions belonging to network systems of facilities or entities that are part of the critical infrastructure of a region, a state or a country. There is a high interest in keeping these systems running even in times of crisis, extreme large-scale disasters, or other events that can stress such networks.

Critical infrastructure is a term used by governments to describe assets that are essential for the functionality of a society and economy - the infrastructure. Most commonly associated with this term are facilities for shelter, heating (e. g. natural gas, fuel oil, district heating), agriculture, food production and distribution, water supply (e. g. drinking water, waste water/sewage, stemming of surface water (e. g. dikes and sluices), public health (e. g. emergencies, hospitals, ambulances), transportation systems (e. g. fuel supply, railway network, airports, harbors, inland shipping), security services (e. g. police, military), electricity generation, transmission and distribution (e. g. natural gas, fuel oil, coal, nuclear power), renewable energy which is naturally replenished on a human timescale such as sunlight, wind, rain, tides, waves and geothermal heat, telecommunication (e. g. coordination for successful operations). Further, the business or economic sector as well as goods and services and financial services (e. g. banking, clearing) may also be affected by such crises.

In this context, such facilities and, above all, their networks must not only operate stably and reliably in a crisis situation, but must also observe certain legal, infrastructural or other rules. Mostly or primarily, government organizations or surveillance are directly connected to these institutions or are in close contact with them. Another important point is that information in such networks can be found reliably and promptly in order to provide an appropriate response in crisis situations.

For Example, in emergency ecosystems like Next Generation (NG) 9-1-1 or NG 1-1-2, such systems suffer from inter-connectivity and information sharing issues across different jurisdictions. This happens because a common database (DB) that can store information between Public Safety Answering Points (PSAPs) regarding incident handling does not exist. The issue becomes even more critical when two or more Public Safety Answering Point (PSAP) elements which do not belong to the same jurisdiction receive an emergency request with regards to the same incident. The indication could be related to an emergency call, an abandoned call, or even multiple calls for the same incident which are routed on different PSAP elements, e. g. due to Policy-based Routing Function (PRF) rules. PRF is a functional component of an Emergency Service Routing Proxy (ESRP) that determines the next hop in, for example, a SIP signaling path using a Policy Routing Rule.

Moreover, even if such a mechanism could be in place, a common way to sync the information and preserve the clarity across all PSAPs would be very difficult. This happens mostly due to the fact that all the PSAP elements do not rely on the same vendor. Thus, a unique framework would be beneficial in order to offer a mechanism that will share information among the different PSAP elements regarding incidents.

Blockchain is suitable for keeping information preserved and trustworthy. However, for blockchain systems that are used within an emergency response system or a critical infrastructure system, it is essential that such systems are both trustworthy and fast.

There are also blockchains with pluggable consensus, which means they can incorporate various consensus mechanisms depending on the goals that need to be achieved. Thus, blockchain networks may exploit different consensus mechanisms during their lifetime according to the debate of the network. For example, it is very common that a blockchain network may start by exploiting the proof of work (PoW) algorithm and then, when a significant amount of cryptocurrency has been mined, they can switch on the proof of stake (PoS), or any other relevant algorithm. This means that it is possible that different blocks are mined across the timeline using different consensus algorithms.

This differentiation creates the problem that based on the existing architectures (public or private), each application (i. e. ledger and nodes), should operate under a different blockchain network, devoted to a specific type of task, exploiting specific consensus algorithms.

Taking this into account, this invention refers to transactions which exist at the same time in the blockchain pool but are totally different in terms of context. So, for example, the same blockchain network can be used both by financial users and users which exploit the blockchain to submit transactions related to other aspects, e. g. emergency issues. Any other type of application can also be considered.

The prior art considers blockchain networks which are focused on the mining of blocks of a specific context (i. e. financial etc.). Existing blockchain networks of the state of the art are devoted to specific types of transactions. There are solutions on how it is possible to mine on parallel multiple blocks at the same time, by splitting the transactions in segments. Other sources propose a solution to split the mining work in different nodes in the blockchain, to create motivation in multiple nodes to cooperate in order to solve a block.

Patent document US2019/238316 discloses a system in which a consensus protocol is selected for a given request to add a new block or transaction to a blockchain, based on the transaction type.

Therefore, the present invention is based on the object to provide a method and a corresponding system for parallel multi-block mining under different consensus schemes. In particular, multi-block generation from a single node in one mining round. Thereby, another object is that a node can use multiple consensus algorithms for different blocks in one round. Another object is to pack transactions in relevant blocks based on their context.

This object is solved by a method having the features according to claim 1 and a corresponding system having the features of claim 13. Preferred embodiments of the invention are defined in the respective dependent claims.

It may happen that transactions are different according to their context. These transactions should ideally be handled by different blockchain networks. In the invention at hand different types of transactions were mixed in the same blockchain. Different types of applications can be connected to this type of blockchain network and submit transactions which are different in terms of context. Such blockchain networks that have different transactions based on context have the advantage that transactions which need to be solved quickly in terms of time can be solved with a different consensus algorithm, e. g. proof of authority consensus, than those that need exact verification, e. g. proof of work. The present invention realizes the concept of multiple block mining at the same time, in parallel from a single node. Thereby, the node separates the transactions based on the context to select the appropriate consensus algorithm in order to use multiple consensus algorithms at the same time (not one after another in different mining rounds).

According to the invention, a method for parallel multi-block mining by a single node, in (a) single round(s) under different consensus schemes is provided, the method comprising the steps of:
- collecting, by one or more node of a plurality of nodes, in a blockchain network transactions which wait in a mempool (memory pool) and which need to be added to a block in a mining round;
- clustering, by the one or more node, the transactions based on their context;
- searching, by the one or more node, the blockchain to find similar transactions based on the context;
- selecting, by the one or more node, an appropriate consensus algorithm based on the context of similar previous mined transactions;
- creating, by the one or more node, corresponding relations between the blocks with similar previous mined transactions and the transactions to be mined;
- identifying, by the one or more node, the consensus algorithms that were selected for similar previous mined transactions;
- organizing, by the one or more node, the context-related transactions in different blocks and selecting the consensus algorithm for each of these blocks based on the identification in the previous step;
- computing, by the one or more node, a node capacity on how many transactions could be mined in the mining round;
- starting, by the one or more node, the mining round with a first mining process for a first block with a consensus algorithm identified; and
- solving, by the one or more node, the first block.

In terms of the invention, a transaction pool is also named a mempool or a memory pool which is an electronic file or container that contains unconfirmed data about unconfirmed transactions.

Further, according to a preferred embodiment, the node and/or the leader node of the blockchain is one or more of a Public Safety Answering Point element (PSAP) a computer, a server, and/or an element of an entity of critical infrastructure.

According to yet another preferred embodiment, the context is any piece of information related to an incident, an image, a video, a sound, a geolocation and/or any other pieces of data.

According to a preferred embodiment, the method further comprises starting in the same mining round, by the one or more node which performed the first mining process, a second mining process for a second block with a consensus algorithm identified; and solving, by the one or more node, the second block.

According to another preferred embodiment, the method further comprises reorganizing, by the one or more node, the transactions which were not included in blocks in the mining round and including these blocks in the mempool or in a buffer or a storage for a future mining round.

According to still another preferred embodiment, the method after the step of searching further comprises selecting, by the one or more node, an appropriate consensus algorithm based on previous mined blocks, in the case no similar previous transactions were found. Next, creating, by the one or more node, corresponding relations between the previous mined blocks and the transactions to be mined. Then, identifying, by the one or more node, the consensus algorithms that were selected for the previous mined blocks and organizing, by the one or more node, the transactions to be mined in different blocks and selecting the consensus algorithm for each of these blocks based on the identification in the previous step and processing the method further with the step of computing the capacity.

Further, according to a preferred embodiment, the method after the step of searching further comprising selecting, by the one or more node, an appropriate consensus algorithm based on the context of the transactions to be mined in the case neither similar previous transactions nor previous mined blocks were found and processing the method further with the step of computing the capacity.

According to yet another preferred embodiment, the method in the step of computing the capacity further comprises organizing, the blocks to be mined according to their capacity consumption, starting from the lowest consumption to the highest consumption block until the capacity of the node is reached.

According to yet another preferred embodiment of the method, the mining process starts with the block to be mined with the lowest consumption of capacity and/or the block which is most critical in terms of time.

According to yet another preferred embodiment, in place of solving the block by the one or more node, the method further comprises receiving, by the one or more node, a success message from another node and stopping the current mining process.

According to yet another preferred embodiment of the method, the mining round comprises of n-mining processes.

According to yet another preferred embodiment of the method, one mining round lasts at least 5 minutes, preferably at least 10 minutes and particularly preferably at least 20 minutes.

According to yet another preferred embodiment of the method, the blockchain comprises at least one virtual chain, wherein at least two blocks of the blockchain are connected to each other based on their context. The present invention relies also on the concept of virtual chains. The correlation between existing and new blocks based on context creates new so-called virtual chains. Virtual chains do not only create links between the different blocks based on the related transactions, but here blocks which consist only of the selected transactions which belong on the same context (application-related) are created. All of the transactions related to the same context will use the same consensus algorithm to get mined as if it was done by separate blockchain networks. By linking these virtual chains in a new mining round, again based on context, thus a large number of virtual chains can be created which exist alongside the actual blockchain. Special analyses, e. g. of the capacity of various parameters of the nodes, can thus be carried out more efficiently and in a shorter time with less effort. Tasks or other events that would otherwise be processed or executed in parallel can also be uncovered and bundled or effectively assigned to one unit. By incorporating the blockchain architecture, each node will need to report in every mining round the new context which is handled by this node.

All the other nodes will remain updated about the context which is handled by each node. By using virtual chains, it is possible to create links between the different context which may not be positioned in adjacent blocks. The invention offers a model that can be used, for example, in an emergency context as well as in any other context. In essence, multiple other embedded context-based chains are formed using only one existing blockchain.

According to yet another preferred embodiment of the method, the consensus algorithm is one or more of proof of authority (PoAuth), proof of stake (PoS), delegated proof of stake (DPoS), leased proof of stake (LPoS), proof of elapsed time (PoET), practical Byzantine fault tolerance (PBFT), simplified Byzantine fault tolerance (SBFT), delegated Byzantine fault tolerance (DBFT), directed acyclic graphs (DAG), proof of activity (PoA), proof of importance (Pol), proof of capacity (PoC), proof of burn (PoB), multi-signature (multisig) and/or proof of weight (PoWeight).

In the direction of achieving a fast block creation, the avoidance of a proof of work (PoW) consensus algorithm is considered a sine qua non. Especially in the case of a permissioned blockchain, i. e. a private blockchain that is not public but that is only shared among specific entities (e. g., among PSAP elements), it is considered mandatory to avoid PoW. For this reason, in the context of this proposal, we consider that the nodes operate using the proof of authority (PoAuth) consensus algorithm.

In PoAuth, rights to generate new blocks are awarded to nodes that have proven their authority to do so. These nodes run software allowing them to put transactions in blocks. PoAuth is suited for both private networks and public networks where trust is distributed. The PoAuth consensus algorithm leverages the value of identities which means that block validators are not staking coins but their own reputation instead. PoAuth is secured by trust on the identities selected. The PoAuth algorithm offers an increased rate of block creation. All nodes in the blockchain are given a specific interval on which they become the leader nodes and it is possible to generate new blocks. However, any other similar consensus algorithm can be exploited for the same reason.

In proof of stake (PoS), blockchain consensus models' transactions are secured by users of the blockchain network who play the role of validators. To validate transactions, validators must hold a certain percentage of the network's total value. This concept leads to a reduced usage of system & hardware resources. Proof of stake might also provide increased protection from malicious attacks on the network by making it very expensive to execute attacks, and therefore, reducing the incentive for those attacks.

While PoW and PoS consensus are used in the majority of today's blockchain networks, there are also many other models of the consensus mechanism having the same ultimate goal - maintain the security and operation of a decentralized platform and allow blockchain users to come to an agreement in block creation. Below are just a few of the modern implementations of decentralized consensus:
- Delegated proof of stake (DPoS): DPoS is a high-speed consensus model, most known for its first implementation in the cryptocurrency EOS blockchain. Delegated proof of stake mechanism is a type of consensus where users can stake their coins to participate in voting for a number of delegates. The weight of a user's vote depends on the stake. Delegates that have received the highest number of votes are allowed to take part in block creation and get rewarded for creating these blocks.
- Multi-signature (multisig): multisig is a model where most validators on the blockchain network (for instance 7 out of 10) must agree that a transaction is valid.
- Proof Of capacity (PoC): PoC is a model where consensus is achieved via a process called plotting. Instead of using computational power to create solutions, they are pre-stored in digital storages. The owner of the fastest solution to the puzzle gets to create the new block. Users who have the most storage capacity on the blockchain have the highest odds of creating a new block.
- Practical Byzantine fault tolerance (PBFT): PBFT is an algorithm designed to settle disputes among computing nodes (blockchain network participants) when one node in a set of nodes generates different output from the others in the set.

There are also blockchains with pluggable consensus, which means they can incorporate various consensus mechanisms depending on the goals that need to be achieved. In the sense of the invention, it is also possible to use a hybrid consensus, i. e. two or more consensuses that run in parallel and that can even influence each other.

According to the invention, a corresponding system for parallel multi-block mining by a single node, in (a) single round(s) under different consensus schemes is provided, wherein the system is configured to perform one or more steps of the method for parallel multi-block mining under different consensus schemes.

According to a preferred embodiment, the system comprises:
- a plurality of nodes connected to each other within the blockchain network,
- one or more node capable to perform the block generating process,
- one or more transaction,
- a chain of blocks in a specific order,
- one or more consensus algorithm,
- one or more validator node,
- a blockchain ecosystem.

A blockchain ecosystem constitutes a service overlay network and to be a node in the network, a computer must be able to process application-specific messages, must comply with the rules of the network and/or applied consensus and affect the shared state of the network. Such an ecosystem may comprise a system management which provides the ability to create, change and monitor blockchain components. A consensus algorithm is a set of rules and arrangements to carry out blockchain operations. A transaction is the smallest building data block of the blockchain system.

According to another preferred embodiment, the system further comprises one or more virtual chain which is chained based on its context and is encapsulated in the chain.

According to yet another aspect of the present invention, a program element is provided which when being executed by a processor is adapted to carry out steps of the method for parallel multi-block mining under different consensus schemes.

According to another aspect of the present invention, a computer-readable medium comprising program code is provided which when being executed by a processor is adapted to carry out steps of the method for parallel multi-block mining under different consensus schemes.

A computer-readable medium may be a floppy disk, a hard disk, an USB (Universal Serial Bus) storage device, a RAM (Random Access Memory), a ROM (Read Only Memory) or an EPROM (Erasable Programmable Read Only Memory). A computer readable medium may also be a data communication network, e. g. the Internet, which may allow downloading a program code.

It has also to be noted that aspects of the invention have been described with reference to different subject-matters. In particular, some aspects or embodiments have been described with reference to apparatus type claims whereas other aspects have been described with reference to method type claims. However, a person skilled in the art will gather from the above and the following description that, unless otherwise notified, in addition to any combination between features belonging to one type of a subject-matter also any combination between features relating to different types of subject-matters is considered to be disclosed with this text. In particular, combinations between features relating to the apparatus type claims and features relating to the method type claims are considered to be disclosed. The invention and embodiments thereof will be described below in further detail in connection with the drawing(s).
- Fig. 1: shows a flowchart of method steps according to an embodiment of the invention;
- Fig. 2: shows a schematically overview of the concept of parallel mining using different consensus algorithms for different blocks according to another embodiment of the invention;
- Fig. 3: shows a schematically overview of an architecture of a blockchain according to another embodiment of the invention.

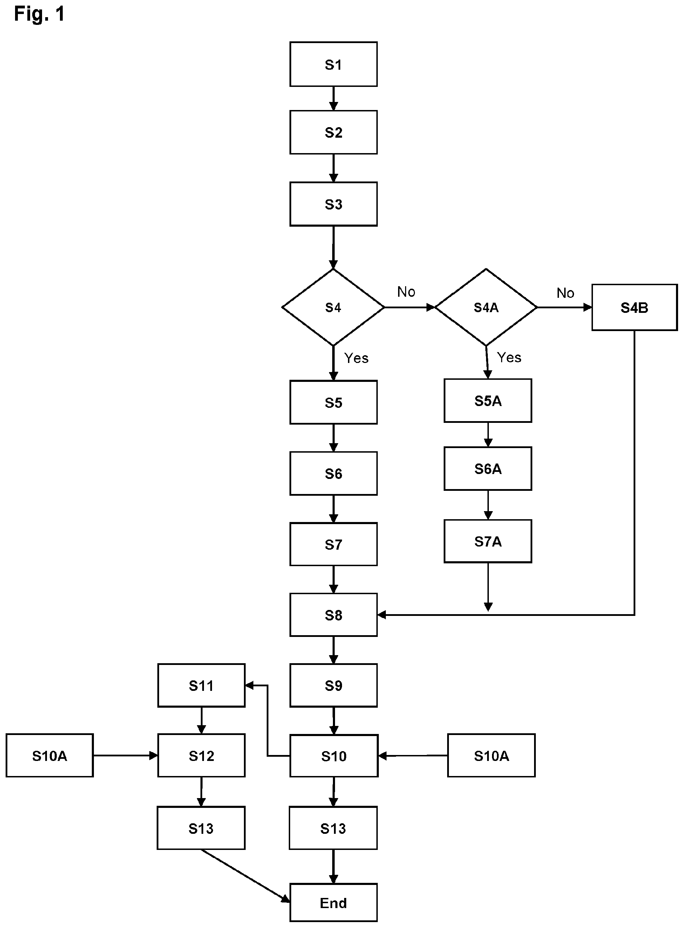

In Fig. 1 the method steps according to an embodiment of the invention are depicted. As can be seen in step S1 every node in the network collects the transactions which need to be added to the next block for mining and wait in the transaction pool. In terms of the invention, a transaction pool is also named a mempool or a memory pool which is an electronic file or container which contains unconfirmed data about unconfirmed transactions.

Then in step S2, a separation of the transactions based on their context takes place. In the next step S3, a search is performed in the blockchain in order to find similar transactions based on the context. In the step S4, it is checked if transactions are found.

If no relevant previous transactions in the blockchain are found, the method checks for previous mined blocks in step S4A.

If previous mined blocks are found, then in step S5A, corresponding relations between the previous mined blocks and the transactions to be mined are created. The method then proceeds with the step S6A where the one or more node identifies the consensus algorithms that were selected for the previous mined blocks and then, in step S7A, organizing, by the one or more node, the transactions to be mined in different blocks and selecting the consensus algorithm for each of these blocks based on the identification in the previous step and processing the method further with the step S8 and computing the capacity of the node.

Otherwise, in step S4B, in the case no historic information of previous mined blocks is available (i. e. in the first mining round), the node picks the most appropriate consensus algorithm based only on the context of the transactions to be mined. And then the method proceeds with step S8, however, the node capacity is computed based on only the information of consensus algorithm picked in step S4B.

In the case relevant transactions exist in step S4, the method proceeds with step S5. In this step, the corresponding relations between the blocks and the transactions are created. Then in the next step S6, based on the relations with past existing blocks and following the virtual blockchains, the different consensus algorithms are identified and selected with which the past existing blocks were solved or mined along the virtual blockchain. In step S7, the nodes organize the context-related transactions in different blocks and select the consensus algorithm for each block according to the findings from step S6.

In step S8, the node capacity is computed on how many transactions could be mined in parallel based on the setup, which was done in one of the steps S7, S7A or S4B. Further, the blocks to be mined may be organized according to their capacity consumption starting from the lowest consumption to the highest consumption block until the capacity of the node is reached.

Then in step S9 the node starts a mining process. How many mining processes can be performed in one round by the same node depends on the capacity of the node and/or on the complexity or difficulty of the mining process itself, i. e. which consensus algorithm is used, etc.

In the next step S10 the current node solves the block of this mining process. If the node finishes the first mining process, then in step S11, it can start a second mining process for a second block with same or different consensus algorithm, if it is enough time remaining in this mining round. In principle, the same node can mine or solve as many blocks as time and capacity is available in the current mining round. Finally, in step S12, the node solves the second block.

In any case, the upper limit of the remaining time for each round is bounded by the average time of the solution on the most difficult block. For example, if based on the transactions which exist on the mempool, in the beginning of a mining round, there are two types of blocks which can be formed based on the transaction context, the first one that requires PoA and a second one that requires PoW, the maximum time for this round would be avgMiningTime(PoA) + avgMiningTime(PoW). Where the avgMiningTime indicates the average time which is required by a node to mine a block using a specific consensus algorithm.

If a node solves the first block using the PoA consensus in time less or equal to the avgMiningTime(PoA), then it can try to solve also the second block, because the remaining time is enough. If the node does not wish to try for the second block, it will announce the first block to the network, and the second block will be mined by another node. In any case, all the nodes are aware that they must solve as many blocks as can be formed by the transactions which exist on the mempool of every node, after the last successful mining process has finished. This infers the average time period that will be needed by the nodes to solve the new blocks (i. e., how long the new mining round will last).

In step S13 the node reorganizes the transactions which were not included in blocks in this round to get included in future blocks. Therefore, the node can temporarily keep these transactions in its mempool, in a buffer or a storage to add them in the next mining round.

Further, in place of solving the current mining process by itself, the node in step S10A may receive a success message from another node. In this case, the node stops the current mining process and may proceed with another one if time is left in this mining round. But this means that the second or the n-th block, it will need to use the hash value of the announced block.

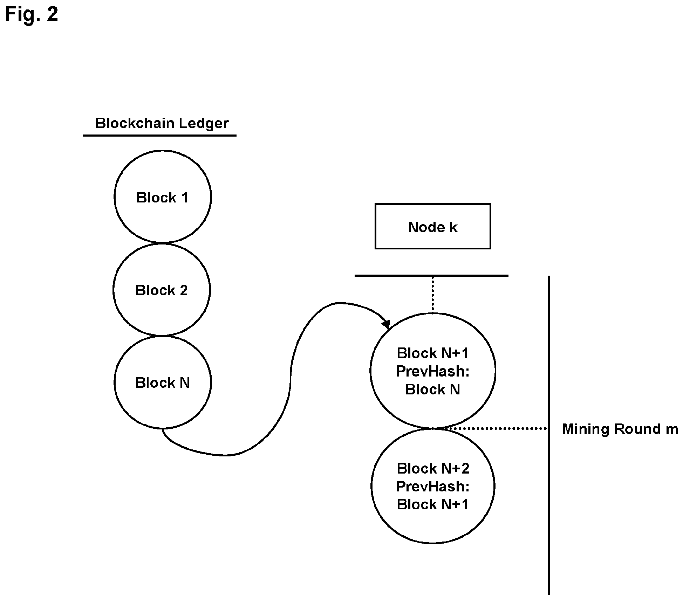

Fig. 2 shows a schematically overview of the concept of parallel mining using different consensus algorithms for Block N+1 and Block N+2. Usually, blockchain networks mine only one block per mining round. In this embodiment, it is described to mine more than one block, using different consensus algorithms. Assumed, for example, that one block, namely Block 1, is related to emergency incidents and thus the proof of authority (PoAuth) consensus algorithm can be used, while another one, namely Block 2, is related to financial transactions and the proof of work (PoW) consensus algorithm must be used.

Obviously, those two consensus algorithms have a totally different efficiency in terms of elapsed time. The PoAuth consensus algorithm is far faster than the algorithm of PoW. This means that if a node somehow was assigned the task to mine both blocks, the method according to this embodiment is designed to go first for Block 1 in a mining perspective and then for Block 2. This is because Block 1 is very fast to be done and probably far more critical in terms of time.

This could not work if we had two blocks with the same consensus algorithm, say the PoW algorithm, due to the limit of the usually 10 minutes interval per mining round. Still, when there are different consensus algorithms per block, such a scenario is possible. To get this issue solved, it is necessary to pack the transactions in different blocks per context, and then apply all the n-mining procedures. Thereby, starting from the most lightweight one to the most difficult until the capacity of the node is reached.

In Fig. 2 Node k prepares and mines both Block N+1 and N+2 at the same mining round m, using the necessary hash relations by exploiting different consensus algorithms. After solving the puzzles, the blocks can be added in the blockchain ledger, after Block N.

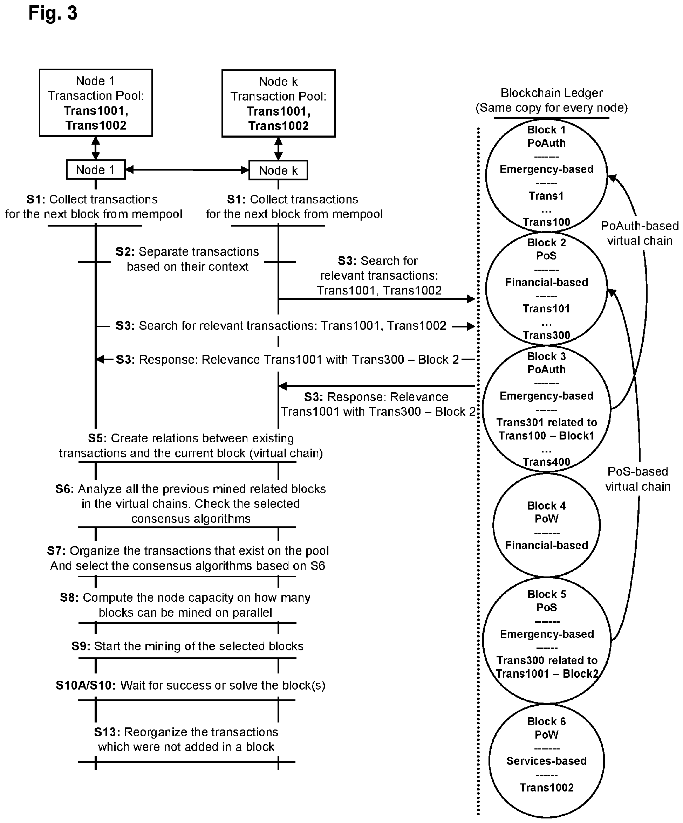

Fig. 3 shows a schematically overview of an architecture of a blockchain. Thereby, a single blockchain network is assumed on which the nodes support multiple different consensus schemes, and various types of transactions. All the nodes support all these transactions and thus they can mine using specific consensus schemes per context without the need to communicate the selection of a new consensus algorithm to the rest of the nodes. The blockchain according to Fig. 3, uses different steps of the proposed method. Additionally, in this embodiment, the Node 1 and Node k are described, but the method can be applied in any number of nodes. In step S1, both nodes, Node 1 and Node k select transactions that will be included in the next mined block. It is considered that the method is triggered the next time a new round for mining is initiated.

In step S2, the two nodes separate the transactions based on their context. Say, for example, that in their mempool, the two nodes have only two transactions during this mining round, namely as Trans1001 and Trans1002.

In step S3, both two nodes ping the Blockchain Ledger to retrieve transactions and correlate them with Trans1001 and Trans1002. As soon as the nodes receive the responses, they identify that there is a correlation between Trans1001 and Trans300 which is included in Block 2.

In step S5, the corresponding relation between Block 5 and Block 2 is created. So, Block 5 now contains Trans1001 and any other number of related transactions. In step S6, it is identified that Block 2 was mined by exploiting the PoS consensus algorithm. For this reason, in step S7, the same consensus algorithm is selected for Block 5 and, additionally in this step, it is selected that Trans1002 will be added in a next block, namely as Block 6. Keeping in mind that in the scenario of this embodiment it is assumed that these two blocks contain only one transaction, but any number of transactions could be supported up to the max level of each block.

For Block 6 the PoW consensus algorithm is selected based on the context of the packed transaction(s), i. e. Trans1002.

Then in step S8, both nodes check the instant capacity of the node in order to identify if the node can calculate both Block 5 and Block 6. It is assumed that all of the nodes which participate in the network fulfill the requirements of supporting parallel mining and they also support multiple consensus algorithms. Thus, the hardware should be similar. Under these assumptions, the capacity of the nodes in every mining round should be preserved intact.

Both nodes check in step S8 that their capacity is capable to mine both blocks (Block 5 and Block 6) based on the PoS and PoW consensus algorithms respectively. In step S9, they start the mining process trying to solve both blocks.

Eventually, when one of the n-nodes solves both the blocks it will send a message to the rest of the network that it has finished successfully. Thus, then the other nodes will be in position to verify the blocks. In step S10 of Fig. 3, Node 1 announces that it successfully found a solution for both of Block 5 and Block 6. This message is also conveyed to Node k for verification in step S10/S10A. In the last step S13 the nodes reorganize possible transactions which were not included in the blocks.

It should be noted that the term "comprising" does not exclude other elements or steps and the "a" or "an" does not exclude a plurality. Further, elements described in association with different embodiments may be combined.

It should also be noted that reference signs in the claims shall not be construed as limiting the scope of the claims.

### Reference numerals

- Node 1: blockchain network Node 1
- Node k: blockchain network Node k
- Trans1001: Transaction Nr. 1001
- Trans1002: Transaction Nr. 1002
- Trans*: Transaction Nr. *, wherein * is a random number
- PoW: Proof of Work consensus algorithm
- PoA: Proof of Activity consensus algorithm
- PoS: Proof of Stake consensus algorithm
- PrevHash: Previous Hash (Hashmark for a previous mined block)
- S1 - S13: Steps S1 to S13 of the method

## Claims

1. A method for parallel multi-block mining by a single node, in a single round under different consensus schemes, wherein the method comprises the steps of:
- S1 collecting, by one or more node of a plurality of nodes, in a blockchain network transactions which wait in a mempool or memory pool, and which need to be added to a block in a mining round;
- S2 clustering, by the one or more node, the transactions to be mined based on their context in one or more cluster of context-related transactions;
- S3 searching, by the one or more node, the blockchain to find similar transactions based on the context;
- S4 selecting, by the one or more node, an appropriate consensus algorithm based on the context of similar previous mined transactions;
- S5 creating, by the one or more node, corresponding relations between the blocks with similar previous mined transactions and the one or more cluster of context-related transactions to be mined;
- S6 identifying, by the one or more node, the consensus algorithms that were selected for said similar previous mined transactions;
- S7 organizing, by the one or more node, the transactions to be mined in different blocks, one of said blocks comprising one of said one or more cluster and selecting the consensus algorithm for each of these blocks based on the identification in the previous step;
- S8 computing, by the one or more node, a node capacity on how many blocks of said different blocks could be mined in the mining round based on the different blocks and their selected consensus algorithm;
- S9 starting, by the one or more node, the mining round with a first mining process for a first of said different blocks with the consensus algorithm selected for said first block; and
- S10 solving, by the one or more node, the first block.

2. The method according to claim 1, wherein the method further comprises:
- S11 starting in the same mining round, by the one or more node which performed the first mining process, a second mining process for a second block with a consensus algorithm identified; and
- S12 solving, by the one or more node, the second block.

3. The method according to any of the preceding claims, wherein the method further comprises:
- S13 reorganizing, by the one or more node, the transactions which were not included in blocks in the mining round and including these transactions in the mempool or memory pool, for a future mining round.

4. The method according to any of the preceding claims, wherein the method after step S3 further comprises:
- S4A selecting, by the one or more node, an appropriate consensus algorithm based on previously mined blocks, in the case no similar previous transactions were found;
- S5A creating, by the one or more node, corresponding relations between the previous mined blocks and the transactions to be mined;
- S6A identifying, by the one or more node, the consensus algorithms that were selected for the previous mined blocks;
- S7 organizing, by the one or more node, the transactions to be mined in different blocks and selecting the consensus algorithm for each of these blocks based on the identification in the previous step and processing the method further with step S8.

5. The method according to any of the preceding claims, wherein the method after step S3 further comprises:
- S4B selecting, by the one or more node, an appropriate consensus algorithm based on the context of the transactions to be mined in the case neither similar previous transactions nor previous mined blocks were found and processing the method further with step S8.

6. The method according to any of the preceding claim, wherein step S8 of the method further comprises organizing, the blocks to be mined according to their capacity consumption, starting from the lowest consumption to the highest consumption block until the capacity of the node is reached.

7. The method according to claim 6, wherein the mining process starts with the block to be mined with the lowest consumption of capacity and/or the block which is most critical in terms of time.

8. The method according to any of the preceding claims, wherein the method in place of step S10 and/or step S12 further comprises:
- S10A receiving, by the one or more node, a success message from another node and stopping the current mining process.

9. The method according to any of the preceding claims, wherein the mining round comprises n mining processes.

10. The method according to any of the preceding claims, wherein one mining round lasts at least 5 minutes, preferably at least 10 minutes and particularly preferably at least 20 minutes.

11. The method according to any of the preceding claims, wherein the blockchain comprises at least one virtual chain, wherein at least two blocks of the blockchain are connected to each other based on their context.

12. The method according to any of the preceding claims, wherein the consensus algorithm is one or more of proof of authority, PoAuth, proof of stake, PoS, delegated proof of stake, DPoS, leased proof of stake, LPoS, proof of elapsed time, PoET, practical Byzantine fault tolerance, PBFT, simplified Byzantine fault tolerance, SBFT, delegated Byzantine fault tolerance, DBFT, directed acyclic graphs, DAG, proof of activity, PoA, proof of importance, Pol, proof of capacity, PoC, proof of burn, PoB, multi-signature, multisig, and/or proof of weight, PoWeight.

13. A system for parallel multi-block mining by a single node, in a single round under different consensus schemes, wherein the system is configured to perform the method according to any of the claims 1 to 12.

14. The system according to claim 13, wherein the system comprises:
- a plurality of nodes connected to each other within the blockchain network,
- one or more node capable to perform the block generating process,
- one or more transaction,
- a chain of blocks in a specific order,
- one or more consensus algorithm,
- one or more validator node,
- a blockchain ecosystem.

15. The system according to claim 13 or 14, wherein the system further comprises one or more virtual chain which is chained based on its context and is encapsulated in the chain.

## Patentansprüche

1. Verfahren zum parallelen Mehrblock-Schürfen durch einen einzelnen Knoten in einer einzelnen Runde unter unterschiedlichen Konsensschemata, wobei das Verfahren die Schritte umfasst:
- S1 Sammeln, durch einen oder mehrere Knoten aus einer Vielzahl von Knoten in einem Blockchain-Netzwerk, von Transaktionen, die in einem Mempool oder Speicherpool warten und die in einer Schürfrunde zu einem Block hinzugefügt werden müssen;
- S2 Clustern, durch den einen oder die mehreren Knoten, der zu schürfenden Transaktionen basierend auf ihrem Kontext in einen oder mehrere Cluster von kontextbezogenen Transaktionen;
- S3 Durchsuchen, durch den einen oder die mehreren Knoten, der Blockchain, um basierend auf dem Kontext ähnliche Transaktionen zu finden;
- S4 Auswählen, durch den einen oder die mehreren Knoten, eines geeigneten Konsensalgorithmus basierend auf dem Kontext ähnlicher vorheriger geschürfter Transaktionen;
- S5 Erzeugen, durch den einen oder die mehreren Knoten, entsprechender Beziehungen zwischen den Blöcken mit ähnlichen vorherigen geschürften Transaktionen und dem einen oder den mehreren Clustern von zu schürfenden kontextbezogenen Transaktionen;
- S6 Identifizieren, durch den einen oder die mehreren Knoten, der Konsensalgorithmen, die für die ähnlichen vorherigen geschürften Transaktionen ausgewählt wurden;
- S7 Organisieren, durch den einen oder die mehreren Knoten, der in unterschiedlichen Blöcken zu schürfenden Transaktionen, wobei einer der Blöcke einen des einen oder der mehreren Cluster umfasst, und Auswählen des Konsensalgorithmus für jeden dieser Blöcke basierend auf der Identifizierung in dem vorherigen Schritt;
- S8 Berechnen, durch den einen oder die mehreren Knoten, einer Knotenkapazität dazu, wie viele Blöcke der unterschiedlichen Blöcke in der Schürfrunde geschürft werden könnten, basierend auf den unterschiedlichen Blöcken und ihrem ausgewählten Konsensalgorithmus;
- S9 Starten, durch den einen oder die mehreren Knoten, der Schürfrunde mit einem ersten Schürfprozess für einen ersten der unterschiedlichen Blöcke mit dem für den ersten Block ausgewählten Konsensalgorithmus; und
- S10 Lösen, durch den einen oder die mehreren Knoten, des ersten Blocks.

2. Verfahren nach Anspruch 1, wobei das Verfahren ferner umfasst:
- S11 Starten, in derselben Schürfrunde, durch den einen oder die mehreren Knoten, die den ersten Schürfprozess durchgeführt haben, eines zweiten Schürfprozesses für einen zweiten Block mit einem identifizierten Konsensalgorithmus; und
- S12 Lösen, durch den einen oder die mehreren Knoten, des zweiten Blocks.

3. Verfahren nach einem der vorstehenden Ansprüche, wobei das Verfahren ferner umfasst:
- S13 Reorganisieren, durch den einen oder die mehreren Knoten, der Transaktionen, die in der Schürfrunde nicht in Blöcke eingeschlossen wurden, und Einschließen dieser Transaktionen in den Mempool oder Speicherpool für eine zukünftige Schürfrunde.

4. Verfahren nach einem der vorstehenden Ansprüche, wobei das Verfahren nach Schritt S3 ferner umfasst:
- S4A Auswählen, durch den einen oder die mehreren Knoten, eines geeigneten Konsensalgorithmus basierend auf zuvor geschürften Blöcken, falls keine ähnlichen vorherigen Transaktionen gefunden wurden;
- S5A Erzeugen, durch den einen oder die mehreren Knoten, entsprechender Beziehungen zwischen den vorherigen geschürften Blöcken und den zu schürfenden Transaktionen;
- S6A Identifizieren, durch den einen oder die mehreren Knoten, der Konsensalgorithmen, die für die vorherigen geschürften Blöcke ausgewählt wurden;
- S7 Organisieren, durch den einen oder die mehreren Knoten, der in unterschiedlichen Blöcken zu schürfenden Transaktionen und Auswählen des Konsensalgorithmus für jeden dieser Blöcke basierend auf der Identifizierung in dem vorherigen Schritt und weiteres Verarbeiten des Verfahrens mit Schritt S8.

5. Verfahren nach einem der vorstehenden Ansprüche, wobei das Verfahren nach Schritt S3 ferner umfasst:
- S4B Auswählen, durch den einen oder die mehreren Knoten, eines geeigneten Konsensalgorithmus basierend auf dem Kontext der zu schürfenden Transaktionen, falls weder ähnliche vorherige Transaktionen noch vorherige geschürfte Blöcke gefunden wurden, und weiteres Verarbeiten des Verfahrens mit Schritt S8.

6. Verfahren nach einem der vorstehenden Ansprüche, wobei Schritt S8 des Verfahrens ferner das Organisieren der zu schürfenden Blöcke gemäß ihrem Kapazitätsverbrauch umfasst, beginnend mit dem Block mit dem niedrigsten Verbrauch bis zu dem mit dem höchsten Verbrauch, bis die Kapazität des Knotens erreicht ist.

7. Verfahren nach Anspruch 6, wobei der Schürfprozess mit dem zu schürfenden Block mit dem geringsten Kapazitätsverbrauch und/oder dem Block beginnt, der zeitlich am kritischsten ist.

8. Verfahren nach einem der vorstehenden Ansprüche, wobei das Verfahren anstelle von Schritt S10 und/oder Schritt S12 ferner umfasst:
- S10A Empfangen, durch den einen oder die mehreren Knoten, einer Erfolgsnachricht von einem anderen Knoten und Stoppen des aktuellen Schürfprozesses.

9. Verfahren nach einem der vorstehenden Ansprüche, wobei die Schürfrunde n Schürfprozesse umfasst.

10. Verfahren nach einem der vorstehenden Ansprüche, wobei eine Schürfrunde mindestens 5 Minuten, vorzugsweise mindestens 10 Minuten und besonders bevorzugt mindestens 20 Minuten dauert.

11. Verfahren nach einem der vorstehenden Ansprüche, wobei die Blockchain mindestens eine virtuelle Kette umfasst, wobei mindestens zwei Blöcke der Blockchain basierend auf ihrem Kontext miteinander verbunden sind.

12. Verfahren nach einem der vorstehenden Ansprüche, wobei der Konsensalgorithmus eines oder mehreres Proof of Authority, PoAuth, Proof of Stake, PoS, Delegated Proof of Stake, DPoS, Leased Proof of Stake, LPoS, Proof of Elapsed Time, PoET, Practical Byzantine Fault Tolerance, PBFT, Simplified Byzantine Fault Tolerance, SBFT, Delegated Byzantine Fault Tolerance, DBFT, Directed Acyclic Graphs, DAG, Proof of Activity, PoA, Proof of Importance, PoI, Proof of Capacity, PoC, Proof of Burn, PoB, Multi-Signature, Multisig, und/oder Proof of Weight, PoWeight ist.

13. System zum parallelen Mehrblock-Schürfen durch einen einzelnen Knoten in einer einzigen Runde unter unterschiedlichen Konsensschemata, wobei das System konfiguriert ist, um das Verfahren nach einem der Ansprüche 1 bis 12 durchzuführen.

14. System nach Anspruch 13, wobei das System umfasst:
- eine Vielzahl von Knoten, die innerhalb des Blockchain-Netzwerks miteinander verbunden sind,
- einen oder mehrere Knoten, die in der Lage sind, den Blockerzeugungsprozess durchzuführen,
- eine oder mehrere Transaktionen,
- eine Kette von Blöcken in einer spezifischen Reihenfolge,
- einen oder mehrere Konsensalgorithmen,
- einen oder mehrere Validator-Knoten,
- ein Blockchain-Ökosystem.

15. Verfahren nach Anspruch 13 oder 14,
worin das System ferner eine oder mehrere virtuelle Ketten umfasst, die basierend auf ihrem Kontext verkettet sind und in der Kette gekapselt sind.

## Revendications

1. Procédé de minage multiblocs en parallèle au moyen d'un seul nœud, pendant un seul cycle dans différents schémas de consensus, dans lequel le procédé comprend les étapes consistant à :
- S1 collecter, au moyen d'un ou plusieurs nœuds d'une pluralité de nœuds, dans un réseau de chaîne de blocs, des transactions qui attendent dans un mempool ou pool de mémoire et qui doivent être ajoutées à un bloc pendant un cycle de minage ;
- S2 regrouper, au moyen du ou des nœuds, les transactions à miner en fonction de leur contexte en un ou plusieurs groupes de transactions liées au contexte ;
- S3 parcourir, au moyen du ou des nœuds, la chaîne de blocs à la recherche de transactions similaires en fonction du contexte ;
- S4 sélectionner, au moyen du ou des nœuds, un algorithme de consensus approprié en fonction du contexte de transactions minées précédentes similaires ;
- S5 créer, au moyen du ou des nœuds, des relations correspondantes entre les blocs avec des transactions minées précédentes similaires et le ou les groupes de transactions liées au contexte à miner ;
- S6 identifier, au moyen du ou des nœuds, les algorithmes de consensus qui ont été sélectionnés pour lesdites transactions minées précédentes similaires ;
- S7 organiser, au moyen du ou des nœuds, les transactions à miner dans différents blocs, l'un desdits blocs comprenant l'un desdits un ou plusieurs groupes et sélectionner l'algorithme de consensus pour chacun de ces blocs en fonction de l'identification à l'étape précédente ;
- S8 calculer, au moyen du ou des nœuds, une capacité de nœud relative au nombre de blocs desdits différents blocs qui pourraient être minés pendant le cycle de minage en fonction des différents blocs et de leur algorithme de consensus sélectionné ;
- S9 commencer, au moyen du ou des nœuds, le cycle de minage avec un premier processus de minage pour un premier desdits différents blocs avec l'algorithme de consensus sélectionné pour ledit premier bloc ; et
- S10 résoudre, au moyen du ou des nœuds, le premier bloc.

2. Procédé selon la revendication 1, dans lequel le procédé comprend en outre :
- S11 le fait de commencer, pendant le même cycle de minage, au moyen du ou des nœuds qui ont réalisé le premier processus de minage, un second processus de minage pour un second bloc avec un algorithme de consensus identifié ; et
- S12 la résolution, par le ou les nœuds, du second bloc.

3. Procédé selon l'une quelconque des revendications précédentes, dans lequel le procédé comprend en outre :
- S13 la réorganisation, par le ou les nœuds, des transactions qui n'ont pas été incluses dans des blocs pendant le cycle de minage et le fait d'inclure ces transactions dans le mempool ou pool de mémoire pour un cycle de minage futur.

4. Procédé selon l'une quelconque des revendications précédentes, dans lequel le procédé, après l'étape S3, comprend en outre :
- S4A la sélection, par le ou les nœuds, d'un algorithme de consensus approprié en fonction de blocs précédemment minés dans le cas où aucune transaction précédente similaire n'a été trouvée ;
- S5A la création, par le ou les nœuds, de relations correspondantes entre les blocs minés précédents et les transactions à miner ;
- S6A l'identification, par le ou les nœuds, des algorithmes de consensus qui ont été sélectionnés pour les blocs minés précédents ;
- S7 l'organisation, par le ou les nœuds, des transactions à miner dans différents blocs et la sélection de l'algorithme de consensus pour chacun de ces blocs en fonction de l'identification à l'étape précédente et la poursuite du traitement du procédé avec l'étape S8.

5. Procédé selon l'une quelconque des revendications précédentes, dans lequel le procédé, après l'étape S3, comprend en outre :
- S4B la sélection, par le ou les nœuds, d'un algorithme de consensus approprié en fonction du contexte des transactions à miner dans le cas où ni des transactions précédentes similaires ni des blocs minés précédents n'ont été trouvés et la poursuite du traitement du procédé avec l'étape S8.

6. Procédé selon l'une quelconque des revendications précédentes, dans lequel l'étape S8 du procédé comprend en outre l'organisation des blocs à miner en fonction de leur consommation de capacité en commençant par le bloc à la consommation la plus faible jusqu'au bloc à la consommation la plus élevée jusqu'à ce que la capacité du nœud soit atteinte.

7. Procédé selon la revendication 6, dans lequel le processus de minage commence avec le bloc à miner avec la plus faible consommation de capacité et/ou le bloc qui est le plus critique en termes de temps.

8. Procédé selon l'une quelconque des revendications précédentes, dans lequel le procédé, à la place de l'étape S10 et/ou de l'étape S12, comprend en outre :
- S10A la réception, par le ou les nœuds, d'un message de réussite provenant d'un autre nœud et l'arrêt du processus de minage en cours.

9. Procédé selon l'une quelconque des revendications précédentes, dans lequel le cycle de minage comprend n processus de minage.

10. Procédé selon l'une quelconque des revendications précédentes, dans lequel un cycle de minage dure au moins 5 minutes, de préférence au moins 10 minutes et de manière particulièrement préférée au moins 20 minutes.

11. Procédé selon l'une quelconque des revendications précédentes, dans lequel la chaîne de blocs comprend au moins une chaîne virtuelle, dans lequel au moins deux blocs de la chaîne de blocs sont connectés l'un à l'autre en fonction de leur contexte.

12. Procédé selon l'une quelconque des revendications précédentes, dans lequel l'algorithme de consensus est un ou plusieurs parmi une preuve d'autorité, PoAuth, une preuve par l'enjeu, PoS, une preuve par l'enjeu déléguée, DPoS, une preuve par l'enjeu louée, LPoS, une preuve de temps écoulé, PoET, une tolérance aux pannes byzantines pratique, PBFT, une tolérance aux pannes byzantines simplifiée, SBFT, une tolérance aux pannes byzantines déléguée, DBFT, des graphes orientés acycliques, DAG, une preuve d'activité, PoA, une preuve d'importance, PoI, une preuve de capacité, PoC, une preuve de destruction, PoB, une multisignature, multisig, et/ou une preuve de poids, PoWeight.

13. Système de minage multiblocs en parallèle au moyen d'un seul nœud unique, pendant un seul cycle dans différents schémas de consensus, dans lequel le système est configuré pour réaliser le procédé selon l'une quelconque des revendications 1 à 12.

14. Système selon la revendication 13, dans lequel le système comprend :
- une pluralité de nœuds connectés les uns aux autres au sein du réseau de chaîne de blocs,
- un ou plusieurs nœuds capables de réaliser le processus de génération de bloc,
- une ou plusieurs transactions,
- une chaîne de blocs dans un ordre spécifique,
- un ou plusieurs algorithmes de consensus,
- un ou plusieurs nœuds de validation,
- un écosystème de chaîne de blocs.

15. Système selon la revendication 13 ou 14,
dans lequel le système comprend en outre une ou plusieurs chaînes virtuelles qui sont mises en chaînes en fonction de leur contexte et sont encapsulées dans la chaîne.
